# EUROPÄISCHE PATENTANMELDUNG

(11) **EP 2 479 468 A1**
(43) Veröffentlichungstag der Anmeldung: **25.07.2012**
(21) Anmeldenummer: 12002770.1
(22) Anmeldetag: 08.08.2007
(51) Int. Cl.: F16L 21/06, F16L 59/04, F16L 59/16, F16L 59/20

(54) **Abdeckungsvorrichtung mit Dichtelement**

(30) Priorität: 12.08.2006 DE 202006012464 U
(62) Teilanmeldung aus: 07801553.4
(71) Anmelder: Rehau AG & Co, 95111 Rehau (DE); Brugg Rohr Ag Holding, 5200 Brugg (CH)
(72) Erfinder: Liebel, Volker, 81371 München (DE); Bolli, Anja, 7078 Lenzerheide (CH); Rudi, Roberto, 5107 Schinznach-Dorf (CH)
(74) Vertreter: Münch, Martin Walter

(57) **Zusammenfassung**

Die Erfindung bezieht sich auf eine Abdeckungsvorrichtung, vorzugsweise zur Nachisolierung der Verbindungsstelle von Rohren, umfassend wenigstens zwei Abdeckungsschalen (1,2), welche die Rohre in montiertem Zustand umgeben, wobei die Abdeckungsvorrichtung weiterhin zumindest ein Dichtelement (14) aufweist, das in montiertem Zustand zwischen der Abdeckungsvorrichtung und einem Rohr angeordnet ist und das Rohr umgibt.

Es hat sich gezeigt, dass auf diese Weise eine einfache und effektive Art der Abdichtung des Rohrs gegen die Abdeckungsvorrichtung gegeben ist.

## Beschreibung

Die vorliegende Erfindung betrifft eine Abdeckungsvorrichtung, vorzugsweise zur Nachisolierung der Verbindungsstelle von Rohren, insbesondere von Fernwärmerohren, umfassend wenigstens zwei Abdeckungsschalen, welche die Rohre in montiertem Zustand umgeben, und wenigstens ein Verbindungsmittel zur Verbindung der Abdeckungsschalen.

Fernwärmerohre bestehen zumindest aus einem Mediumrohr, einer darauf angeordneten Wärmedämmung und einem die Wärmedämmung umgebenden Außenmantel. Wenn Fernwärmerohre beispielsweise zur Herstellung eines Abzweigs verbunden werden sollen, muss an den Rohrenden sowohl der Außenmantel, als auch die Wärmedämmung entfernt werden, so dass die Mediumrohre frei liegen. Erst dann ist eine Verbindung der Mediumrohre möglich. Im Anschluss daran ist es notwendig, die Wärmedämmung an der Verbindungsstelle wieder herzustellen.

Aus der DE 4 226 914 C ist eine dieser Aufgabe dienende Abdeckungsvorrichtung bekannt, die aus zwei Formhälften besteht, wobei die Formhälften mittels Schrauben und Muttern verbunden werden. Die Abdichtung erfolgt hier z.B. mit Hilfe einer Butyldichtungsmasse. Nachteilig bei dieser Vorrichtung ist die aufwändige und sehr zeitintensive Montage der Vielzahl von Schrauben und Muttern.

Aufgabe der Erfindung ist es daher, eine Abdeckungsvorrichtung zu schaffen, welche zumindest die aufgeführten Nachteile des Standes der Technik vermeidet.

Diese Aufgabe wird erfindungsgemäß gelöst durch eine Abdeckungsvorrichtung der eingangs genannten Art, die gegenüber der gattungsgemäßen Abdeckungsvorrichtung dadurch verbessert ist, dass das Verbindungsmittel zumindest einen im Wesentlichen hakenförmigen Eingriffsabschnitt aufweist, der für eine zumindest abschnittsweise formschlüssige Verbindung mit wenigstens einem Halteabschnitt vorgesehen ist, wodurch die Abdeckungsschalen gegeneinander verspannbar sind.

Es hat sich gezeigt, dass mit Hilfe des beschriebenen Verbindungsmittels auf schnelle, effektive und einfache Weise eine verlässliche und sichere Verbindung zwischen den Abdeckungsschalen hergestellt werden kann.

Es kann von Vorteil sein, dass der Eingriffsabschnitt klauenförmig ausgebildet ist. Hierdurch ergibt sich eine besonders sichere Verbindung.

Ebenso kann es von Vorteil sein, dass das Verbindungsmittel wenigstens mit einer der beiden Abdeckungsschalen integral ausgebildet ist. Hiermit ergibt sich eine leichtere Montage, und die Gefahr, dass für die Montage notwendige Bauteile verloren gehen, wird deutlich vermindert. Denkbar ist zudem, dass die Abdeckungsschalen bzw. das Verbindungsmittel so ausgeführt sind, dass das Verbindungsmittel beispielsweise durch Einrasten in ein entsprechendes Aufnahmeelement der Abdeckungsschalen in dieses vormontiert werden kann.

Weiterhin kann es von Vorteil sein, dass das Verbindungsmittel als Klammer mit zwei sich gegenüberliegenden Eingriffsabschnitten ausgebildet ist. Dies ist eine besonders einfache Ausführung, die sich bei geringem konstruktiven Aufwand leicht herstellen lässt und die eine sehr zuverlässige Art der Verbindung ergibt.
Außerdem kann es von Vorteil sein, dass das Verbindungsmittel als Hebelverschluss, vorzugsweise als Kniehebelverschluss, ausgebildet ist. Hierdurch gelingt eine äußerst hohe Verspannung der Abdeckungsschalen gegeneinander.

Darüber hinaus kann es von Vorteil sein, dass der Halteabschnitt integral mit der Abdeckungsvorrichtung ausgebildet ist. Dies ist aus fertigungstechnischen Gründen vorteilhaft. Es kann sich als günstig erweisen, dass der Halteabschnitt integral mit einem die Abdeckungsschalen in montiertem Zustand umgreifenden Spannelement ausgebildet ist. Hierdurch ergibt sich ein hoher Freiheitsgrad hinsichtlich der Gestaltung der Abdeckungsschalen, ohne auf die Anordnung des Verbindungsmittels besondere Rücksicht nehmen zu müssen.
Ebenso kann es sich als günstig erweisen, dass die Abdeckungsschalen integral mit diesen ausgeführte Versteifungsrippen aufweisen. Hierdurch wird eine sehr hohe Steifigkeit der Abdeckungsschalen bzw. der Abdeckungsvorrichtung bei gleichzeitig geringem Materialeinsatz erzielt.

Außerdem kann es sich als günstig erweisen, dass zwischen Anlageflächen der Abdeckungsschalen in montiertem Zustand zumindest abschnittsweise eine Dichtung, vorzugsweise eine plastische Dichtmasse oder ein elastomeres Dichtprofil, angeordnet ist. Hiermit gelingt eine Abdichtung der Abdeckungsschalen gegeneinander, so dass beispielsweise keine Nässe in die Abdeckungsvorrichtung eindringen kann.

Darüber hinaus kann es sich als günstig erweisen, dass die Anlageflächen derart geformt sind, dass sich in montiertem Zustand der Abdeckungsschalen eine Nut-Feder-Verbindung ergibt. Hieraus resultiert eine sehr dichte und zuverlässige Verbindung der Abdeckungsschalen, wobei je nach Anforderung an die Dichtheit der Abdeckungsvorrichtung sogar auf eine Dichtung verzichtet werden kann. Im Falle einer spiegelbildlichen Ausgestaltung der Nut- und Federverbindung können die Abdeckungsschalen aus dem gleichen Werkzeug gefertigt werden.

Zudem kann es sich als günstig erweisen, dass die Abdeckungsschalen und/oder das Verbindungsmittel und/oder das Spannelement aus einem polymeren Material, vorzugsweise aus einem thermoplastisch verarbeitbaren Kunststoff bestehen. Diese Materialien sind vergleichsweise günstig und lassen sich selbst bei komplizierten Geometrien einfach und wirtschaftlich verarbeiten.

Die Erfindung betrifft zudem eine Abdeckungsvorrichtung, vorzugsweise zur Nachisolierung der Verbindungsstelle von Rohren, umfassend wenigstens zwei Abdeckungsschalen, welche die Rohre in montiertem Zustand umgeben, wobei die Abdeckungsvorrichtung weiterhin zumindest ein Dichtelement aufweist, das in montiertem Zustand zwischen der Abdeckungsvorrichtung und einem Rohr angeordnet ist und das Rohr umgibt.

Es hat sich gezeigt, dass auf diese Weise eine einfache und effektive Art der Abdichtung des Rohrs gegen die Abdeckungsvorrichtung gegeben ist.

Hierbei kann von Vorteil sein, dass das Dichtelement als Dichtring ausgeführt ist. Diese Geometrie lässt sich vergleichsweise einfach realisieren.

Zudem kann von Vorteil sein, dass das Dichtelement zumindest an einer Stelle seines Umfangs durchtrennt ist. Beispielsweise kann das als Dichtring ausgeführte Dichtelement zweigeteilt sein oder aufklappbar ausgeführt sein.

Hierdurch wird ermöglicht, dass das Dichtelement nach der Herstellung der Rohrverbindung und vor der Montage der Abdeckungsschalen auf dem Rohr montiert werden kann.

Ebenso kann es von Vorteil sein, dass das Dichtelement wenigstens eine Sollbruchstelle aufweist. Dadurch kann das Dichtelement an dieser Stelle leicht durchtrennt werden, so dass auch eine Montage auf dem Rohr nach Herstellung der Rohrverbindung möglich ist, falls die Montage vor der Herstellung der Rohrverbindung vergessen wurde.

Außerdem kann es von Vorteil sein, dass das Dichtelement wenigstens zwei konzentrische Ringe aufweist. Dadurch wird die Anpassung des Dichtelements an verschiedene Rohrdurchmesser durch Entnahme einzelner Ringe ermöglicht.

Es kann sich als günstig erweisen, dass das Dichtelement an seiner Innenwand und/oder an seiner Außenwand rippenförmige Vorsprünge aufweist. Hiermit gelingt eine gute Dichtwirkung selbst bei reduzierten Andruckkräften.
Weiterhin kann es sich als günstig erweisen, dass das Dichtelement in montiertem Zustand formschlüssig mit den Abdeckungsschalen verbunden ist. Dies gewährleistet eine sichere und verlässliche Positionierung des Dichtelements.
Zudem kann es sich als günstig erweisen, dass das Dichtelement aus einem polymeren Material, vorzugsweise aus einem Elastomer oder einem thermoplastischen Elastomer, besteht. Diese Materialien eignen sich aufgrund ihres elastischen Verhaltens besonders für den Einsatz als Dichtelemente.

Sämtliche Kombinationen der zuvor beschriebenen bevorzugten Ausführungsformen sind ebenso möglich.

Die Merkmale und Vorteile der Erfindung werden eingehender in der nachstehenden Beschreibung dargelegt, wobei auf die beigefügten Zeichnungen Bezug genommen wird, auf denen folgendes dargestellt ist:
- Fig. 1:: Eine Abdeckungsschale einer erfindungsgemäßen Abdeckungsvorrichtung in dreidimensionaler Darstellung;
- Fig. 2a:: Eine erste Ausführungsform eines erfindungsgemäßen Verbindungsmittels in montiertem Zustand in Schnittdarstellung;
- Fig. 2b:: Eine zweite Ausführungsform eines erfindungsgemäßen Verbindungsmittels in montiertem Zustand in Schnittdarstellung;
- Fig. 2c:: Eine dritte Ausführungsform eines erfindungsgemäßen Verbindungsmittels in Schnittdarstellung;
- Fig. 3:: Ein erfindungsgemäßes Verbindungsmittel in Kombination mit einem Spannelement in montiertem Zustand in Schnittdarstellung;
- Fig. 4:: Ein erfindungsgemäßes Dichtelement in Schnittdarstellung;

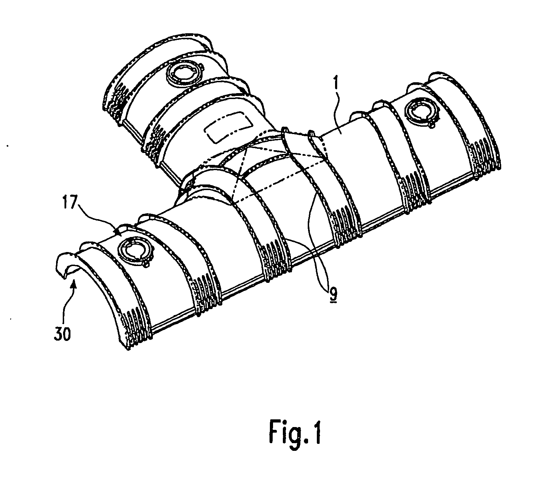

Figur 1 zeigt eine Abdeckungsschale 1 einer erfindungsgemäßen Abdeckungsvorrichtung in dreidimensionaler Darstellung. Die als Halbschale ausgeführte Abdeckungsschale 1 besitzt eine T-Form zur Abdeckung einer entsprechenden 90°-Abzweigung, jedoch ist denkbar, dass die Abdeckungsschale kreuzförmig zur Abdeckung zweier gegenüberliegender 90°-Abzweigungen ausgeführt ist. Zudem ist denkbar, dass die Abdeckungsschale 1 als gerades oder bogenförmiges Bauteil zur Abdeckung eines geraden oder bogenförmigen Verbindungsabschnitts ausgeführt ist. Die Abdeckungsschale 1 ist aus Polypropylen und wurde in einem Spritzgießprozess hergestellt; andere Kunststoffe wie PE, ABS etc. und andere Herstellungsverfahren, z.B. Pressen, sind ebenso vorstellbar. Die Abdeckungsschale 1 weist eine Vielzahl von integral mit dieser ausgebildeter Versteifungsrippen 9 auf. Weiterhin besitzt die Abdeckungsschale 1 drei Einfüllöffnungen 17, die jeweils im Bereich des Scheitelpunkts der Halbschale angeordnet sind. Zudem ist jede der drei Einfüllöffnungen 17 im Bereich des jeweiligen Endabschnitts der Abdeckungsschale 1 angeordnet. Darüber hinaus weist die Abdeckungsschale 1 einen Dichtelementaufnahmeabschnitt 30 zur sicheren Positionierung des (nicht dargestellten) Dichtelementes 14 auf.

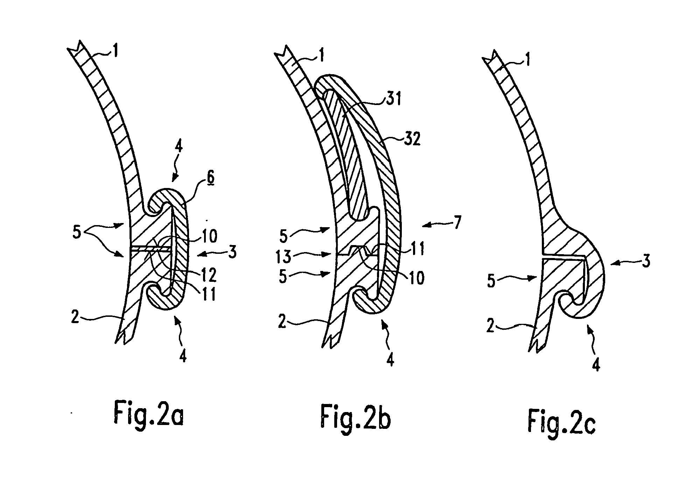

Figur 2a zeigt eine erste Ausführungsform eines erfindungsgemäßen Verbindungsmittels in montiertem Zustand in Schnittdarstellung. Das Verbindungsmittel 3 ist als einteilige Klammer 6 mit zwei sich gegenüberliegenden klauenförmigen Eingriffsabschnitten 4 ausgeführt. Ein Eingriffsabschnitt 4 befindet sich in Eingriff mit dem Halteabschnitt 5 der oberen Abdeckungsschale 1, und der andere, gegenüberliegende Eingriffsabschnitt 4 befindet sich in Eingriff mit dem Halteabschnitt 5 der unteren Abdeckungsschale 2, wobei die Halteabschnitte 5 jeweils integral mit der entsprechenden Abdeckungsschale ausgebildet sind. Zwischen den Anlageflächen 10, 11 der oberen Abdeckungsschale 1 und der unteren Abdeckungsschale 2 ist eine elastomere Dichtung 12 angeordnet.

Figur 2b zeigt eine zweite Ausführungsform eines erfindungsgemäßen Verbindungsmittels in montiertem Zustand in Schnittdarstellung. Hierbei handelt es sich um einen Kniehebelverschluss 7 mit zwei Kniehebelelementen 31, 32. Das Kniehebelelement 31 greift in den integral mit der oberen Abdeckungsschale 1 ausgebildeten Halteabschnitt 5 ein, während das Kniehebelelement 32 mit seinem klauenförmigen Eingriffsabschnitt 4 in den integral mit der unteren Abdeckungsschale 2 ausgebildeten Halteabschnitt 5 eingreift. Die Anlageflächen 10, 11 von oberer Abdeckungsschale 1 und unterer Abdeckungsschale 2 sind derart ausgebildet, dass sich für die beiden Abdeckungsschalen 1, 2 in zusammengefügtem bzw. montiertem Zustand eine Nut-Feder-Verbindung 13 ergibt.

Figur 2c zeigt eine dritte Ausführungsform eines erfindungsgemäßen Verbindungsmittels in Schnittdarstellung. Das integral mit der oberen Abdeckungsschale 1 ausgebildete Verbindungsmittel 3 ist über seinen klauenförmigen Eingriffsabschnitt 4 in Eingriff mit dem mit der unteren Abdeckungsschale 2 integral ausgebildeten Halteabschnitt 5.

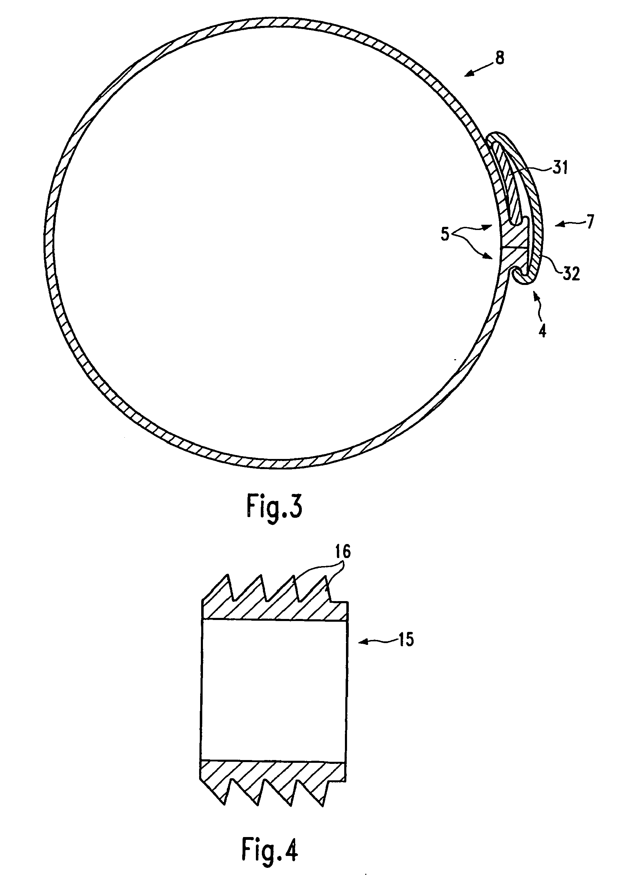

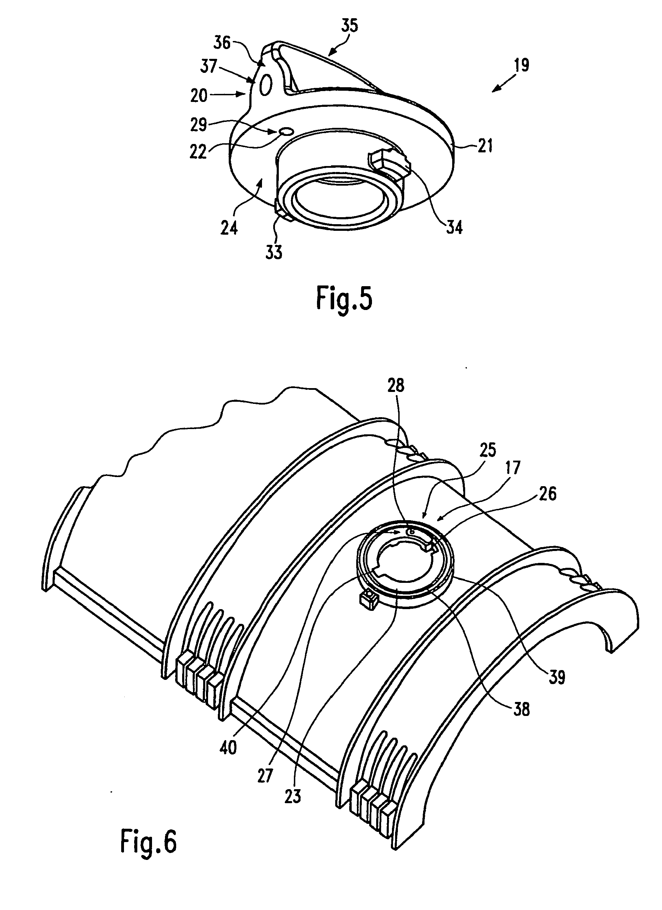

Figur 3 zeigt ein erfindungsgemäßes Verbindungsmittel zusammen mit einem Spannelement in montiertem Zustand in Schnittdarstellung. Das Spannelement 8 zur kompletten Umspannung bzw. Umfassung der (nicht dargestellten) zusammengefügten bzw. montierten Abdeckungsschalen 1, 2 weist zwei integral mit diesem ausgebildete Halteabschnitte 5 auf, wobei das Kniehebelelement 31 des Kniehebelverschlusses 7 in den in der Zeichnung oberen Halteabschnitt 5 eingreift, während das Kniehebelelement 32 mit seinem klauenförmigen Eingriffsabschnitt 4 in den in der Zeichnung unteren Halteabschnitt 5 eingreift. Das Spannelement 8 besteht aus einem thermoplastisch verarbeitbaren Kunststoff, jedoch sind andere Materialien, z.B. aus der Gruppe der metallischen Werkstoffe, oder Werkstoffverbunde, beispielsweise aus Kunststoff und Metall, ebenso denkbar.

Figur 4 zeigt ein erfindungsgemäßes Dichtelement in Schnittdarstellung. Hierbei handelt es sich um einen Dichtring 15, dessen Innenwand glatt ist, und dessen Außenwand ein rippenförmiges bzw. sägezahnartiges Profil mit Vorsprüngen 16 aufweist. Andere Rippengeometrien sind ebenfalls vorstellbar. Der Innendurchmesser des Dichtrings 15 entspricht im Wesentlichen dem Außendurchmesser des (nicht dargestellten) Rohres, auf den der Dichtring 15 aufgezogen wird. Der Dichtring 15 besteht aus einem elastomeren Material. Nachfolgend wird die Wirkungs- und Funktionsweise der Erfindung näher erläutert.

Die Abdeckungsvorrichtung dient vorzugsweise zur Nachisolierung der Verbindungsstelle von Rohren, insbesondere von Fernwärmerohren. Der Stand der Technik beschreibt hierzu beispielsweise eine Vorrichtung, die aus zwei Formhälften besteht, wobei die Formhälften mittels Schrauben und Muttern verbunden werden. Die Abdichtung erfolgt hier z.B. mit Hilfe einer Butyldichtungsmasse. Nachteilig bei diesem Stand der Technik ist die Tatsache, dass die Montage der Vielzahl von Schrauben und Muttern äußerst aufwändig und zeitintensiv ist.

Die erfindungsgemäße Abdeckungsvorrichtung hingegen vermag auf einfache, schnelle und effektive Weise zumindest den oben angeführten Nachteil des Standes der Technik zu vermeiden. Hierzu weist das Verbindungsmittel 3 der wenigstens zwei Abdeckungsschalen 1, 2 und wenigstens ein Verbindungsmittel 3 umfassenden Abdeckungsvorrichtung einen im Wesentlichen hakenförmigen Eingriffsabschnitt 4 auf, der für eine zumindest abschnittsweise formschlüssige Verbindung mit wenigstens einem Halteabschnitt 5 vorgesehen ist, wodurch die Abdeckungsschalen 1, 2 gegeneinander verspannt werden.

Im Falle der Abdeckung und Nachisolierung einer Rohrverbindung mit einer rechtwinkligen Abzweigungsstelle werden T-förmige Abdeckungsschalen 1, 2 verwendet. Vorzugsweise sind die Abdeckungsschalen 1, 2 als Halbschalen mit identischer Geometrie ausgeführt, so dass nur ein Werkzeug für deren Herstellung benötigt wird. Bei der Montage der Abdeckungsvorrichtung wird zunächst eine, vorzugsweise die untere, Abdeckungsschale 2 bzw. die bereits vor der Verbindung der Rohre auf diese aufgebrachten Dichtelemente 14, z.B. in Form von Dichtringen 15, so zueinander angeordnet, dass der entsprechende Teil der Dichtringe 15 mit dem jeweiligen Dichtelementaufnahmeabschnitt 30 der unteren Abdeckungsschale 2 eine formschlüssige Verbindung bildet.
Vorzugsweise zu diesem Zeitpunkt kann eine Dichtung 12 in Form eines Dichtprofils oder einer Dichtmasse auf die Anlagefläche 11 der unteren Abdeckungsschale 2 aufgelegt bzw. aufgebracht werden. Denkbar ist zudem, dass die Dichtung 12 bereits vormontiert ist.

Danach wird die zweite, obere Abdeckungsschale 1 derart angeordnet, dass der noch nicht formschlüssig verbundene Teil der Dichtringe 15 mit dem jeweiligen Dichtelementaufnahmeabschnitt 30 der oberen Abdeckungsschale 1 eine formschlüssige Verbindung bildet. Auch an der oberen Anlagefläche 10 kann eine Dichtung 12 vormontiert sein bzw. kann diese während der Montage an- oder aufgebracht werden. Um die beiden Abdeckungsschalen 1, 2 nun gegeneinander zu verspannen, werden Verbindungsmittel 3, z.B. in der Form von Klammern 6 mit gegenüberliegenden, klauenförmigen Eingriffsabschnitten 4 mit entsprechenden Halteabschnitten 5 der Abdeckungsschalen 1, 2 in Eingriff gebracht bzw. mit diesen verrastet. Dies geschieht vorzugsweise an einer Vielzahl von Stellen der Abdeckungsvorrichtung, um eine gleichmäßige Verteilung der Spannkraft zu erzielen.

Durch die Verspannung der Abdeckungsschalen 1, 2 gegeneinander ergibt sich eine dichte Verbindung, die sich durch die beschriebene Verwendung einer zwischen den Anlageflächen 10, 11 angeordneten Dichtung 12 noch weiter verbessern lässt. Sind die Anlageflächen 10, 11 von oberer und unterer Abdeckungsschale 1, 2 derart ausgeführt, dass sich bei deren Zusammenfügen z.B. eine Nut-Feder-Verbindung 13 ergibt, kann unter Umständen auf eine zwischen den Anlageflächen 10, 11 angeordnete Dichtung 12 verzichtet werden. Zudem sorgt die Verspannung der Abdeckungsschalen 1, 2 dafür, dass die Dichtringe 15 an die Innenwand der Abdeckungsschalen 1, 2 gepresst werden, woraus eine gute Abdichtung der Abdeckungsvorrichtung gegen die Rohre resultiert.

Um nun in montiertem und abgedichtetem Zustand der Abdeckungsvorrichtung die Nachisolierung der Rohre zu realisieren, werden zunächst in zwei der drei Einfüllöffnungen 17 Verschlusselemente 19 eingesetzt und gedreht, bis sie in der zweiten Raststellung, d.h. in der Verschlussposition, einrasten, so dass die entsprechenden Einfüllöffnungen 17 verschlossen sind und die Verschlusselemente 19 im Wesentlichen vollständig gegen die Abdeckungsschale 1 bzw. gegen die Abdeckungsvorrichtung abdichten. In die verbleibende Einfüllöffnung 17, bei der es sich in der Regel um die Einfüllöffnung handelt, welche unter den gegebenen Montagebedingungen die höchste Lageposition aufweist, wird das Dichtungsmaterial eingefüllt.

Hierbei handelt es sich beispielsweise um in-situ expandierendes Material wie Polyurethanschaum. Vorzugsweise wird das Dichtungsmaterial mit Hilfe einer Kartusche eingefüllt, wobei die Kartusche eine definierte Menge an Dichtungsmaterial enthält, die auf das Volumen des jeweiligen vorhandenen Zwischenraums abgestimmt ist.

Nach Einfüllen des Dichtungsmaterials wird auch in die dritte Einfüllöffnung 17 ein Verschlusselement eingesetzt.

## Patentansprüche

1. Abdeckungsvorrichtung, vorzugsweise zur Nachisolierung der Verbindungsstelle von Rohren, umfassend wenigstens zwei Abdeckungsschalen (1, 2), welche die Rohre in montiertem Zustand umgeben, **dadurch gekennzeichnet, dass** die Abdeckungsvorrichtung weiterhin zumindest ein Dichtelement (14) aufweist, das in montiertem Zustand zwischen der Abdeckungsvorrichtung und einem Rohr angeordnet ist und das Rohr umgibt.

2. Abdeckungsvorrichtung nach Anspruch 1, **dadurch gekennzeichnet, dass** das Dichtelement (14) als Dichtring (15) ausgeführt ist.

3. Abdeckungsvorrichtung nach Anspruch 1 oder 2, **dadurch gekennzeichnet, dass** das Dichtelement (14) zumindest an einer Stelle seines Umfangs durchtrennt ist.

4. Abdeckungsvorrichtung nach zumindest einem der vorangegangenen Ansprüche, **dadurch gekennzeichnet, dass** das Dichtelement (14) wenigstens eine Sollbruchstelle aufweist.

5. Abdeckungsvorrichtung nach zumindest einem der vorangegangenen Ansprüche, **dadurch gekennzeichnet, dass** das Dichtelement (14) wenigstens zwei konzentrische Ringe aufweist.

6. Abdeckungsvorrichtung nach zumindest einem der vorangegangenen Ansprüche, **dadurch gekennzeichnet, dass** das Dichtelement (14) an seiner Innenwand und/oder an seiner Außenwand rippenförmige Vorsprünge (16) aufweist.

7. Abdeckungsvorrichtung nach zumindest einem der vorangegangenen Ansprüche, **dadurch gekennzeichnet, dass** das Dichtelement (14) in montiertem Zustand formschlüssig mit den Abdeckungsschalen (1, 2) verbunden ist.

8. Abdeckungsvorrichtung nach zumindest einem der vorangegangenen Ansprüche, **dadurch gekennzeichnet, dass** das Dichtelement (14) aus einem polymeren Material, vorzugsweise aus einem Elastomer oder einem thermoplastischen Elastomer, besteht.
